# EUROPÄISCHE PATENTSCHRIFT

(11) **EP 3 965 557 B1**
(45) Veröffentlichungstag und Bekanntmachung des Hinweises auf die Patenterteilung: **05.06.2024**
(21) Anmeldenummer: 20722306.6
(22) Anmeldetag: 27.04.2020
(51) Int. Cl.: A01G 23/06

(54) **HANDGEFÜHRTE VORRICHTUNG ZUM RODEN VON STUBBEN**
HAND-HELD DEVICE FOR STUMP CLEARING
DISPOSITIF PORTABLE POUR LE DÉFRICHAGE DE SOUCHES D'ARBRE

(30) Priorität: 07.05.2019 DE 102019111776
(43) Veröffentlichungstag der Anmeldung: 16.03.2022
(73) Patentinhaber: Müller, Marcel, 50858 Köln (DE)
(72) Erfinder: Müller, Marcel, 50858 Köln (DE)
(74) Vertreter: Duda, Rafael Thomas
(86) Internationale Anmeldenummer: PCT/EP2020/061645
(87) Internationale Veröffentlichungsnummer: WO 2020/225011

(56) Entgegenhaltungen:
- DE-U1-202016 104 853
- FR-A- 1 350 017
- GB-A- 2 288 784
- US-B2- 10 159 200

## Beschreibung

Die vorliegende Erfindung betrifft eine Vorrichtung zum grobstückigen Zerspanen von Stubben umfassend mindestens zwei hebelartige, gegeneinander bewegliche, gelenkig miteinander verbundene Zangenbacken, wobei an wenigstens einer der Zangenbacken an dem der anderen Zangenbacke zugewandten Ende ein Schneidorgan ausgebildet sind, wobei die beiden Zangenbacken durch Einwirkung der Kraft einer Antriebsvorrichtung gegeneinander beweglich sind.

Muss nach der Fällung eines Baumes der verbliebene Stubben (Baumstumpf) entfernt werden, so wird dieser gemäß dem Stand der Technik in der Regel mittels einer Stubbenfräse (EP000001457106B1, US5623979A) durch ein schnell laufendes, mit Hartmetallmeißeln bestücktes Fräsrad in situ zerspant. Dieses Verfahren bringt jedoch zahlreiche Nachteile mit sich.

Leistungsstarke Stubbenfräsen sind in der Regel selbstfahrend und mindestens mehrere 100 kg schwer, so dass der Zugang zur Baustelle oft schwierig oder gar ganz unmöglich ist. Selbst kleinere Ausführungen wiegen mindestens 100 kg, sind 70 oder mehr cm breit und verfügen oft nicht über genug Frästiefe, um größere Stubben ganz zu entfernen. Weiterhin sind diese Fräsen, bedingt durch das schnell drehende Fräsrad und den notwendigen leistungsstarken Antriebsmotor, sehr laut, haben durch die teuren und einem hohen Verschleiß ausgesetzten Hartmetallmeißel hohe Wartungskosten und können Steine und Fräsgut mit hoher Geschwindigkeit umherwerfen, so dass es trotz entsprechender Sicherungsmaßnahmen immer wieder zu Unfällen kommt. Darüber hinaus wird das zerspante Holz mit der aufgefrästen Erde vermischt, so dass, wenn dieses nicht vor Ort verwendet werden kann, große Mengen Fräsgut entsorgt werden müssen.

Alternativ dazu gibt es ein baggergeführtes Rodungsmesser (DE102008027549B4), das die Probleme mit Lärm, Verschleiß und Unfallgefahr vermeidet, indem es ein langsam, aber mit großer Kraft geführtes Schneidorgan verwendet, um die Wurzel zu grobstückig zu zerspanen. Dies ermöglicht es auch, das zerspante Holz von der Erde getrennt aufzusammeln und z.B. einer thermischen Verwertung zuzuführen. Der große Nachteil dieses Systems ist jedoch, dass ein Bagger auf der Baustelle vorhanden sein muss, was meist mit zusätzlichen Kosten verbunden und je nach Zuwegung ganz unmöglich ist.

Auch andere eher im Forst genutzte Verfahren die bohrend (DE000029622421 U1 sowie EP000002095707B1), schneidend und spaltend (DE000003128467A1 sowie DD000000242161A) oder reißend (DE000001940446A_) arbeiten sind auf einen Bagger oder andere schwere Baumaschinen angewiesen. GB 2 288 784 A und US 10 159 200 B2 veranschaulichen noch weitere alternative Lösungen.

In der DE 31 28 467 A1 ist eine Vorrichtung mit den eingangs genannten Merkmalen beschrieben. Hier handelt es sich um ein einem Traktor ähnliches Fahrzeug, bei dem das Zerspanen der Stubben über eine hydraulische Zange mit zwei Zangenbacken erfolgt, die an einem Frontladerarm des Fahrzeugs angehängt ist. Es sind zwei Hydraulikzylinder vorgesehen, die beim Ausfahren die Zangenbacken schließen und die im oberen Bereich außen an den Zangenbacken angreifen. Die Zangenbacken sind zwischen zwei Seitenbacken gelagert und mit diesen über Lenker verbunden. Eine derartige Anordnung hat ein sehr hohes Gewicht und kann daher nur über ein Fahrzeug bedient werden. Diese Vorrichtung wird daher nicht als handgeführt im Sinne der vorliegenden Erfindung angesehen. Ein solches Fahrzeug ist schwer, hat einen erheblichen Arbeitsradius und kann beispielsweise im Forstbereich eingesetzt werden, nicht aber in Gärten oder ähnlichen Bereichen, wo der Arbeitsraum für das Fahrzeug nicht vorhanden ist oder die zu entfernenden Stubben mit dem Fahrzeug nicht erreichbar sind.

Die Aufgabe der vorliegenden Erfindung besteht darin, eine Vorrichtung zur Verfügung zu stellen, die diese Nachteile vermeidet, ein langsam, aber mit großer Kraft geführtes Schneidorgan verwendet, um die Wurzel grobstückig zu zerspanen, dabei jedoch durch einen einzelnen Menschen geführt werden kann.

Diese Aufgabe wird durch eine erfindungsgemäße Vorrichtung mit den Merkmalen des Anspruchs 1 gelöst.

Die erfindungsgemäße Vorrichtung ist handgeführt und von einer Arbeitsmaschine oder einem Fahrzeug unabhängig ausgebildet.

Im Rahmen der vorliegenden Erfindung gibt es im Prinzip zwei alternative bevorzugte Varianten, wobei entweder zwei geeignete Schneidorgane gegeneinander oder ein geeignetes Schneidorgan gegen ein geeignetes Halteorgan geführt wird, so dass sich die aufgewendeten Kräfte näherungsweise aufheben.

Erfindungsgemäß umfasst die Vorrichtung wenigstens eine unmittelbar an den Zangenbacken angreifende Antriebsvorrichtung, welche sich zwischen den beiden Zangenbacken und quer zu einer Verbindungsachse erstreckt, die bei geschlossenen Zangenbacken von einem die beiden Zangenbacken schwenkbar verbindenden Gelenk zu den ein Schneidorgan aufweisenden Enden der Zangenbacken verläuft.

Vorzugsweise ist die Antriebsvorrichtung ein vorzugsweise doppelt wirkender Hydraulikzylinder.

Gemäß einer bevorzugten Weiterbildung der Erfindung weist bei der Vorrichtung wenigstens ein Schneidorgan am Schneidende einer der Zangenbacken wenigstens zwei Schneiden auf, die in einem Winkel von 45 ° bis 135 °, vorzugsweise in einem Winkel von 60 ° bis 120 ° zueinander angeordnet sind, wobei das Schneidorgan vorzugsweise etwa L-förmig ausgebildet ist. Während man bei Verwendung nur einer Schneide, Gefahr läuft, dass diese zwar in den Stubben eindringt, sich dann aber verklemmt, kann man bei Verwendung von zwei zueinander im Winkel stehenden Schneiden an einem Schneidorgan einen Span effektiv von dem Stubben abtrennen.

Gemäß einer bevorzugten Weiterbildung der Erfindung ist wenigstens eine der Schneiden eines der etwa plattenförmigen Schneidorgane an der Zangenbacke so angebracht, dass es einen Freiwinkel α von 0 ° bis 30 ° bildet, vorzugsweise einen Freiwinkel α von 5 ° bis 15 °.

Vorzugsweise ist weiterhin am Schneidende jeder Zangenbacke jeweils ein Schneidorgan ausgebildet, wobei vorzugsweise beide Schneidorgane gleich geformt und spiegelsymmetrisch zu einer Ebene angeordnet sind, die sich durch die Verbindungsachse erstreckt.

Nachfolgend wird die Erfindung anhand eines Ausführungsbeispiels unter Bezugnahme auf die beiliegenden Zeichnungen näher erläutert. Dabei zeigen:
Figur 1 eine schematisch vereinfachte Ansicht einer erfindungsgemäßen Vorrichtung mit geschlossenen Zangenbacken;
Figur 2 eine entsprechende Ansicht der Vorrichtung von Figur 1 mit geöffneten Zangenbacken;
Figur 3 eine Ansicht bei der man etwa in Achsrichtung der Antriebsvorrichtung (Hydraulikzylinder) auf eine der Zangenbacken schaut und das etwa L-förmige Schneidorgan mit den beiden im Winkel zueinander stehenden Schneiden erkennt.

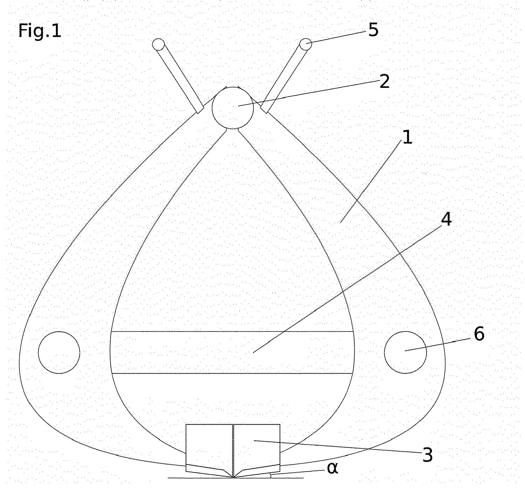

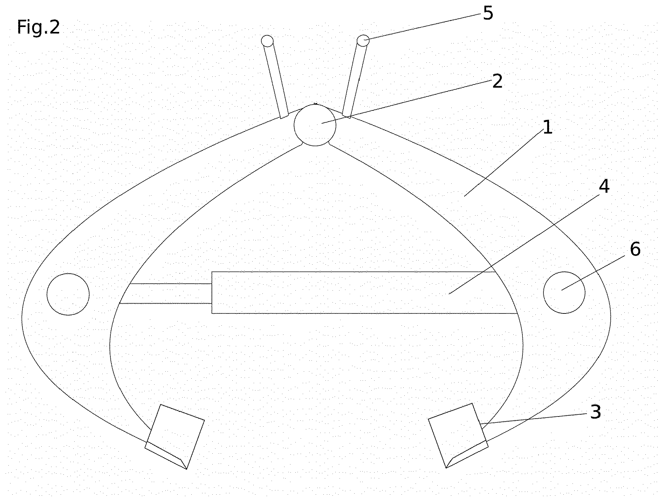

Das in den Figuren 1 bis 3 dargestellte beispielhafte Zerspanungsgerät umfasst eine zangenartige Vorrichtung (Fig. 1) mit zwei Zangenbacken (1), die an ihren jeweiligen Arbeitsenden, die einem Gelenk (2) gegenüberliegen, jeweils ein geeignetes Schneidorgan (3) aufweisen. Zwischen Arbeitsenden und Gelenk liegt ein geeignetes Antriebsorgan (4), das die beiden Backen mit geeigneter Kraft gegeneinander bewegen kann (Fig. 2). Zweckmäßig befinden sich in der Nähe des Gelenks 2 Handgriffe (5) mit Bedienelementen, um die Handhabung zu erleichtern.

Das Antriebsorgan wird zweckmäßig als doppeltwirkender Hydraulikzylinder realisiert, der über Gelenke (6) mit den Backen verbunden ist. Der Hydraulikzylinder weist zweckmäßig einen Innendurchmesser zwischen 70 und 120 mm auf mit einer Kolbenstange zwischen 30 und 70 mm und wird über ein externes Hydraulikaggregat mit 150 bis 400 bar Druck beaufschlagt. Der Rücklauf des Hydraulikzylinders wird vorzugsweise über ein Eilgangventil geschaltet. Zylinder und Aggregat werden vorzugsweise mittels handelsüblicher Steckkupplungen verbunden.

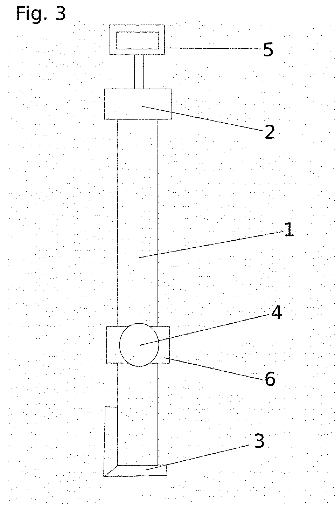

Die Schneidorgane werden bevorzugt L-förmig mit einander zugewandten Schneidkanten ausgeführt (Fig. 3), um ein vollständiges Abtrennen des Spans zu gewährleisten, wodurch verhindert wird, dass sich die Schneidorgane im Holz festsetzen können. Aus dem gleichen Grund werden die Schneidorgane zweckmäßig so ausgeführt, dass sich die Schneidkanten über ihre ganze Länge zugleich berühren. Um Abnutzung zu minimieren, werden die Schneidorgane vorzugsweise aus einem hoch verschleißfesten Stahl (z.B. Hardox 500) ausgeführt und mit einer ballig geschliffenen Schneide mit 25 - 30° Schneidenwinkel versehen.

Um das Eindringen ins Holz zu erleichtern, ist es vorteilhaft, wenn das Schneidorgan so an der Backe angebracht ist, dass die Platte die den waagerechten Teil des L bildet, von der 0 Grad Position relativ zur Tangente des Kreisbogens den die Backe beschreibt um ca. 10° nach außen abweicht, so dass ein Freiwinkel (α) von 10° gebildet wird (siehe Fig.1).

## Patentansprüche

1. Vorrichtung zum grobstückigen Zerspanen von Stubben umfassend mindestens zwei hebelartige, gegeneinander bewegliche, gelenkig miteinander verbundene Zangenbacken, wobei an wenigstens einer der Zangenbacken an dem der anderen Zangenbacke zugewandten Ende ein Schneidorgan ausgebildet sind, wobei die beiden Zangenbacken durch Einwirkung der Kraft einer Antriebsvorrichtung gegeneinander beweglich sind, wobei die Vorrichtung handgeführt und von einer Arbeitsmaschine oder einem Fahrzeug unabhängig ausgebildet ist, **dadurch gekennzeichnet, dass** die Vorrichtung wenigstens eine unmittelbar an den Zangenbacken (1) angreifende Antriebsvorrichtung (4) umfasst, welche sich zwischen den beiden Zangenbacken (1) und quer zu einer Verbindungsachse erstreckt, die bei geschlossenen Zangenbacken (1) von einem die beiden Zangenbacken schwenkbar verbindenden Gelenk (2) zu den ein Schneidorgan (3) aufweisenden Enden der Zangenbacken (1) verläuft.

2. Vorrichtung nach Anspruch 1, **dadurch gekennzeichnet, dass** die Antriebsvorrichtung (4) ein vorzugsweise doppelt wirkender Hydraulikzylinder ist.

3. Vorrichtung nach einem der Ansprüche 1 oder 2, **dadurch gekennzeichnet, dass** wenigstens ein Schneidorgan (3) am Schneidende einer der Zangenbacken (1) wenigstens zwei Schneiden aufweist, die in einem Winkel von 45 ° bis 135 °, vorzugsweise in einem Winkel von 60 ° bis 120 ° zueinander angeordnet sind, wobei das Schneidorgan vorzugsweise etwa L-förmig ausgebildet ist.

4. Vorrichtung nach einem der Ansprüche 1 bis 3, **dadurch gekennzeichnet, dass** wenigstens eine der Schneiden eines der etwa plattenförmigen Schneidorgane (3) an der Zangenbacke (1) so angebracht ist, dass es einen Freiwinkel α von 0 ° bis 30 ° bildet, vorzugsweise einen Freiwinkel α von 5 ° bis 15 °.

5. Vorrichtung nach einem der Ansprüche 1 bis 4, **dadurch gekennzeichnet, dass** am Schneidende jeder Zangenbacke (1) jeweils ein Schneidorgan (3) ausgebildet ist, wobei vorzugsweise beide Schneidorgane gleich geformt und spiegelsymmetrisch zu einer Ebene angeordnet sind, die sich durch die Verbindungsachse erstreckt.

## Claims

1. An apparatus for coarsely chipping stumps, comprising at least two lever-like plier jaws that can be moved relative to one another and are connected to one another in an articulated manner, wherein a cutting element is formed on at least one of the plier jaws on the end facing the other plier jaw, wherein the two plier jaws can be moved relative to one another under the influence of the force of a drive device, and wherein the apparatus is hand-operated and realized independently of a work machine or a vehicle, **characterized in that** the apparatus comprises at least one drive device (4), which engages directly on the plier jaws (1) and extends between the two plier jaws (1) and transverse to a connecting axis that, when the plier jaws (1) are closed, extends from a joint (2) connecting the two plier jaws in a pivotable manner to the ends of the plier jaws (1) having a cutting element (3).

2. The apparatus according to claim 1, **characterized in that** the drive device (4) preferably is a double-acting hydraulic cylinder.

3. The apparatus according to one of claims 1 or 2, **characterized in that** at least one cutting element (3) on the cutting end of one of the plier jaws (1) has at least two cutting edges that are arranged at an angle of 45° to 135°, preferably at an angle of 60° to 120°, to one another, wherein the cutting element preferably is realized in an approximately L-shaped manner.

4. The apparatus according to one of claims 1 to 3, **characterized in that** at least one of the cutting edges of one of the approximately plate-shaped cutting elements (3) is arranged on the plier jaw (1) in such a way that it forms a clearance angle α of 0° to 30°, preferably a clearance angle α of 5° to 15°.

5. The apparatus according to one of claims 1 to 4, **characterized in that** a cutting element (3) respectively is formed on the cutting end of each plier jaw (1), wherein both cutting elements preferably are shaped identically and arranged mirror-symmetrically to a plane extending through the connecting axis.

## Revendications

1. Dispositif destiné au déchiquetage en gros morceaux de souches, comprenant au moins deux mâchoires de pince en forme de levier, mobiles l'une contre l'autre, reliées l'une à l'autre de façon articulée, sachant qu'un organe de coupe est constitué sur au moins une des mâchoires de pince à l'extrémité tournée vers l'autre mâchoire de pince, sachant que les deux mâchoires de pince sont mobiles l'une contre l'autre sous l'effet de la force d'un dispositif d'entraînement, sachant que le dispositif est constitué guidé à la main ou indépendamment d'une machine de travail ou d'un véhicule, **caractérisé en ce que** le dispositif comprend au moins un dispositif d'entraînement (4) venant en prise directement sur les mâchoires de pince (1), lequel s'étend entre les deux mâchoires de pince (1) et transversalement par rapport à un axe de liaison, qui passe avec les mâchoires de pince (1) fermées d'une articulation (2) reliant en pivotement les deux mâchoires de pince aux extrémités des mâchoires de pince (1) comportant un organe de coupe (3).

2. Dispositif selon la revendication 1, **caractérisé en ce que** le dispositif d'entraînement (4) est de préférence un vérin hydraulique à double effet.

3. Dispositif selon l'une quelconque des revendications 1 ou 2, **caractérisé en ce qu'**au moins un organe de coupe (3) comporte au moins deux tranchants à l'extrémité de coupe d'une des mâchoires de pince (1), qui sont disposés dans un angle de 45° à 135°, de préférence dans un angle de 60° à 120°, l'un par rapport à l'autre, sachant que l'organe de coupe est de préférence constitué en forme de L.

4. Dispositif selon l'une quelconque des revendications 1 à 3, **caractérisé en ce qu'**au moins un des tranchants d'un des organes de coupe (3) en forme de plaque est placé sur la mâchoire de pince (1) de telle manière qu'il forme un angle libre α de 0° à 30°, de préférence un angle libre α de 5° à 15°.

5. Dispositif selon l'une quelconque des revendications 1 à 4, **caractérisé en ce qu'**un organe de coupe (3) est respectivement constitué à l'extrémité de coupe de chaque mâchoire de pince (1), sachant de préférence que deux organes de coupe sont disposés en forme identique et en symétrie spéculaire par rapport à un plan, qui s'étend à travers l'axe de liaison.
